(19) Europäisches Patentamt / European Patent Office / Office européen des brevets

(11) **EP 2 140 597 B1**

(12) **EUROPEAN PATENT SPECIFICATION**

(45) Date of publication and mention of the grant of the patent:
**03.10.2018 Bulletin 2018/40**

(21) Application number: **08742310.9**

(22) Date of filing: **27.03.2008**

(51) Int Cl.:
*H04L 1/00* (2006.01)     *H04L 1/16* (2006.01)

(86) International application number:
**PCT/US2008/004003**

(87) International publication number:
**WO 2008/121299 (09.10.2008 Gazette 2008/41)**

(54) **METHOD AND APPARATUS FOR INDICATING A TEMPORARY BLOCK FLOW TO WHICH A PIGGYBACKED ACKNOWLEDGEMENT/NON-ACKNOWLEDGEMENT FIELD IS ADDRESSED**

VERFAHREN UND VORRICHTUNG ZUR KENNZEICHNUNG EINES TEMPORÄREN BLOCKFLUSSES IN EINEM PIGGYBACK-ACK/NACK-ADRESSFELD

PROCÉDÉ ET APPAREIL POUR INDIQUER UN FLUX DE BLOC TEMPORAIRE AUQUEL EST ADRESSÉ UN CHAMP SUPERPOSÉ D'ACCUSÉ DE RÉCEPTION/ACCUSÉ DE NON-RÉCEPTION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.03.2007   US 908535 P**
**19.06.2007   US 945057 P**
**19.06.2007   US 944982 P**
**19.06.2007   US 945034 P**
**20.08.2007   US 956765 P**

(43) Date of publication of application:
**06.01.2010   Bulletin 2010/01**

(73) Proprietor: **InterDigital Technology Corporation Wilmington, DE 19809 (US)**

(72) Inventors:
• **RUDOLF, Marian**
**CA-Montréal, QC H3H1P5 (CA)**
• **AGHILI, Behrouz**
**Melville, New York 11747 (US)**
• **CHITRAPU, Prabhakar, R.**
**Blue Bell, Pennsylvania 19422 (US)**
• **DICK, Stephen, G.**
**Nesconset, New York 11767 (US)**
• **PIETRASKI, Philip, J.**
**Huntington Station, New York 11746 (US)**
• **LI, Yan**
**Pennsylvania 18034 (US)**

(74) Representative: **AWA Sweden AB**
**P.O. Box 1066**
**251 10 Helsingborg (SE)**

(56) References cited:
**GB-A- 2 387 303     US-A1- 2002 170 013**

• **"Discussion on Fast Ack/Nack Report (Doc. No. TDoc GP-070172)" INTERNET CITATION, [Online] 12 February 2007 (2007-02-12), XP007905663 Retrieved from the Internet: URL:http://www.3gpp.org/ftp/tsg_geran/TSG_GERAN/GERAN_33_Seoul/Docs/GP-07 0172.zip> [retrieved on 2008-09-15]**
• **"CHANGE REQUEST. 43.064 CR 0051, CURRENT VERSION: 7.3.0 (Doc. No. zGP-070273)" INTERNET CITATION, [Online] 12 February 2007 (2007-02-12), - 16 December 2007 (2007-12-16) XP007905644 Retrieved from the Internet: URL:http://www.3gpp.org/ftp/tsg_geran/TSG_GERAN/GERAN_33_Seoul/Docs/GP-07 0273.zip> [retrieved on 2008-09-11]**

## Description

FIELD OF INVENTION

The present invention is related to a wireless communication system.

BACKGROUND

Latency reduction is one of the considerations in a GSM/EDGE radio access network (GERAN). Two techniques have been proposed for the latency reduction: reduced transmission time interval (RTTI) and fast acknowledgement/non-acknowledgement (ACK/NACK) reporting (FANR).

Conventionally, an ACK/NACK report is sent in an explicit message, also referred to as a radio link control/medium access control (RLC/MAC) control block. The ACK/NACK report is addressed to a particular radio resource, called a Temporary Block Flow (TBF).

A TBF is a temporal connection between a mobile station and a network to support a uni-directional transfer of data. A TBF is temporary and is maintained only for the duration of the data transfer. Each TBF is assigned a temporary flow identity (TFI) by the network. The TFI is unique among concurrent TBFs in each direction and is used instead of mobile station identity in the RLC/MAC layer. The same TFI is included in every RLC header belonging to a particular TBF.

It has been proposed to send the ACK/NACK report for a certain TBF as a "piggyback" on an RLC/MAC data block that may be addressed to another TBF. The field that carries the ACK/NACK report is referred to as a piggybacked ACK/NACK (PAN) field.

Since the PAN field is included in a data block that may be addressed to a different TBF, it is necessary to identify to which TBF the PAN field is addressed. Various proposals have been made to identify the correct TBF in the PAN field, including using a TFI or an uplink (UL) state flag (USF). During establishment of the uplink TBF, a USF is assigned to each mobile station. The USF is used by the network to indicate which mobile terminal is allowed to transmit in the following uplink radio block.

In either case, some number of bits, (typically ranging from three to five), should be dedicated to the TBF identity in the PAN field. It would be desirable to have an efficient method of sending the TBF identity in the PAN field such that no dedicated bits are needed to identify the TBF.

Huawei: "Discussion on Fast Ack/Nack report", 3GPP TSG GERAN #33, GP-070172, Seoul, South Korea, Feb. 12-16, 2007, discloses proposed Fast Ack/Nack Report procedure rules that are required to guarantee that the network and the mobile station in a consistent way use the TFI based address during TBF establishment phase and TBF release phase.

GB 2 387 303 A discloses a user equipment (UE) specific scrambling code that can be used for the purposes of implicitly identifying the intended UE for a transmission on a shared channel (i.e. no explicit UE identifier is transmitted). This is achieved by scrambling a known or derivable data sequence that must be transmitted anyway, such as a cyclic redundancy code (CRC). It is proposed that this scrambling code be generated by block coding the UE identifier such that the set of scrambling codes has good minimum distance properties for the set of UE identifiers. The proposed technique is to use a set of basis sequences to generate the code. Basis sequences sets exist that will give good minimum distance properties independent of the size of the UE identifier. By using one of these sets, the probability that an unintended UE will incorrectly believe a message on the shared channel to be intended for it can be reduced when compared to existing techniques, such as zero-padding the UE identifier.

US 2002/0170013 A1 discloses a method for data related downlink signaling including selectively tailoring the UE ID to create a UE ID value, which is then added to a data field to create a data mask. This data mask is then further processed as the CRC field and transmitted with the data burst to provide CRC-related functions. An alternative embodiment discloses initializing a CRC generator with UE identification prior to CRC generation. This implicitly includes the UE ID within the CRC without requiring additional overhead signaling.

SUMMARY

The invention is defined by the independent claims. A method and apparatus are described for indicating a TBF to which a PAN field is addressed. A PAN check sequence (PCS) is created, for example using a cyclic redundancy check (CRC) encoding. The PCS is masked with a TFI assigned to a TBF or a mask generated based on the TFI. A data block including the PAN field and the masked PCS is then processed for transmission. The mask may be generated by converting the TFI using an (M, N) code, M being the number of bits of the PCS and N being the number of bits of the TFI. With this scheme, a TFI may be transmitted in a PAN field without using explicit bits to identify the TBF.

BRIEF DESCRIPTION OF THE DRAWINGS

A more detailed understanding may be had from the following description, given by way of example in conjunction with the accompanying drawings wherein:

    Figure 1 shows an example radio block;
    Figure 2 is an example block diagram of a transmitting station; and
    Figure 3 is an example block diagram of a receiving station.

DETAILED DESCRIPTION

When referred to hereafter, the terminology "wireless transmit/receive unit (WTRU)" includes but is not limited to a user equipment (UE), a mobile station (MS), a fixed or mobile subscriber unit, a pager, a cellular telephone, a personal digital assistant (PDA), a computer, or any other type of user device capable of operating in a wireless environment. When referred to hereafter, the terminology "base station" includes but is not limited to a Node-B, a site controller, an access point (AP), or any other type of interfacing device capable of operating in a wireless environment.

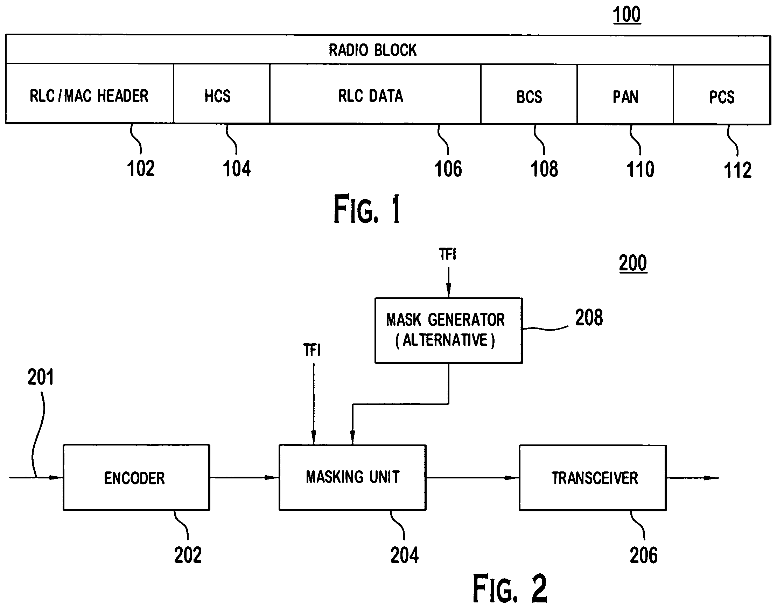

Figure 1 shows an example radio block 100. The radio block 100 for data transfer includes one RLC/MAC header 102, a header check sequence (HCS) 104, one or more RLC data block(s) 106, a block check sequence (BCS) 108, a PAN field 110, and a PCS 112. The RLC/MAC header 102, the RLC data block(s) 106 and the PAN field 110 are coded separately for error detection and correction, and a separate checksum, (e.g., a cyclic redundancy check (CRC) checksum), is attached to each of them. The RLC/MAC header 102 contains a control field indicating whether a PAN field 110 is included or not in the radio block 100. The HCS 104 is used for error detection of the RLC/MAC header 102. The BCS 108 is used for error detection of the RLC data block 106. A separate BCS may be included for each RLC data block. The PAN field 110 contains piggy-backed ACK/NACK information sent in one direction to provide acknowledgement for a TBF in the other direction. The PCS 112 is used for error detection of the PAN field 110.

Figure 2 is an example block diagram of a transmitting station 200. The transmitting station 200 may be a WTRU, a Node-B, or any other apparatus or device. The transmitting station 200 includes an encoder 202, a masking unit 204, and a transceiver 206. A PAN field is input into the encoder 202. The encoder 202 generates a PCS based on the PAN field 201. For example, the encoder may be a cyclic redundancy check (CRC) encoder and the PCS may be a CRC checksum generated based on the PAN field 110. The masking unit 204 then masks the PCS with a TFI, (i.e., TFI is used as a mask). The masking of the PCS bits with the TFI may be performed by modulo-2 addition, (i.e., an exclusive OR (XOR) operation). The transceiver 206 sends a data block 100 including the PAN field 110 and the masked PCS 112. With this scheme, a TFI may be transmitted in a PAN field without using explicit bits to identify the TBF. Before transmission, a channel coding, (such as forward error correction (FEC) coding, rate matching, interleaving, or the like), may be performed.

At least one bit of the TFI is masked with at least one bit of the PCS. For example, when the number of PCS bits (M) is greater than the number of TFI bits (N), (e.g., N=5 and M=10), the TFI bits may be mapped to a portion or all of the PCS bits, (e.g., first N bits, last N bits, or a subset of the M bits). The opposite case is also possible if N is greater than M.

Alternatively, the transmitting station 200 may include a mask generator 208. The mask generator 208 generates a mask from the TFI, and the masking unit 204 masks the PCS with the mask generated by the mask generator 208. The N-bit TFI may be converted into an M-bit mask using an (M, N) code, (M is the number of bits of the PCS), and then the mask may be XORed with the PCS.

Alternatively, the N-bit TFI may be converted into an L-bit mask using an (L, N) code, where L<M, (M is the number of bits of the PCS), and then the mask may be XORed with the PCS. For example, when the number of PCS bits (M) is greater than the number of mask bits (L), (e.g., L=8 and M=10), the mask bits may be mapped to a portion or all of the PCS bits, (e.g., first L bits, last L bits, or a subset of the L bits). The opposite case is also possible.

The M-bit mask may be selected to provide improved separation, (e.g., Hamming distance), between the M bit sequences. For example, it may be obtained by binary multiplying the N-bit TFI with a generator matrix. A good masking code shall have the largest possible minimum distance and the lowest frequency of occurrence of this minimum value.

Example generator matrices of the linear binary codes with maximal minimum distances are provided below. In these examples, the TFI is assumed to be 5 bits long.

(1) A (6,5) code with minimum distance 2 (applicable if M=6):

$$
\begin{matrix}
1 & 0 & 0 & 0 & 0 & 1 \\
0 & 1 & 0 & 0 & 0 & 1 \\
0 & 0 & 1 & 0 & 0 & 1 \\
0 & 0 & 0 & 1 & 0 & 1 \\
0 & 0 & 0 & 0 & 1 & 1
\end{matrix}.
$$

(2) A (7,5) code with minimum distance 2 (applicable if M=7):

$$
\begin{matrix}
1 & 0 & 0 & 0 & 0 & 1 & 1 \\
0 & 1 & 0 & 0 & 0 & 1 & 1 \\
0 & 0 & 1 & 0 & 0 & 1 & 1 \\
0 & 0 & 0 & 1 & 0 & 1 & 1 \\
0 & 0 & 0 & 0 & 1 & 1 & 1
\end{matrix}.
$$

(3) An (8, 5) code with minimum distance 2 (applicable if M=8):

$$1 \quad 0 \quad 0 \quad 0 \quad 0 \quad 1 \quad 1 \quad 0$$
$$0 \quad 1 \quad 0 \quad 0 \quad 0 \quad 1 \quad 0 \quad 1$$
$$0 \quad 0 \quad 1 \quad 0 \quad 0 \quad 0 \quad 1 \quad 1 .$$
$$0 \quad 0 \quad 0 \quad 1 \quad 0 \quad 1 \quad 1 \quad 1$$
$$0 \quad 0 \quad 0 \quad 0 \quad 1 \quad 1 \quad 1 \quad 1$$

(4) A (9, 5) code with minimum distance 3 (applicable if M=9):

$$1 \quad 0 \quad 0 \quad 0 \quad 0 \quad 0 \quad 1 \quad 1 \quad 1$$
$$0 \quad 1 \quad 0 \quad 0 \quad 0 \quad 1 \quad 0 \quad 1 \quad 1$$
$$0 \quad 0 \quad 1 \quad 0 \quad 0 \quad 1 \quad 1 \quad 0 \quad 1 .$$
$$0 \quad 0 \quad 0 \quad 1 \quad 0 \quad 1 \quad 1 \quad 1 \quad 0$$
$$0 \quad 0 \quad 0 \quad 0 \quad 1 \quad 1 \quad 1 \quad 1 \quad 1$$

(5) A (10, 5) code with minimum distance 4 (applicable if M=10):

$$1 \quad 0 \quad 0 \quad 0 \quad 0 \quad 0 \quad 1 \quad 1 \quad 1 \quad 1$$
$$0 \quad 1 \quad 0 \quad 0 \quad 0 \quad 1 \quad 0 \quad 1 \quad 1 \quad 1$$
$$0 \quad 0 \quad 1 \quad 0 \quad 0 \quad 1 \quad 1 \quad 0 \quad 1 \quad 1 .$$
$$0 \quad 0 \quad 0 \quad 1 \quad 0 \quad 1 \quad 1 \quad 1 \quad 0 \quad 1$$
$$0 \quad 0 \quad 0 \quad 0 \quad 1 \quad 1 \quad 1 \quad 1 \quad 1 \quad 0$$

(6) An (11, 5) code with minimum distance 4 (applicable if M=11):

$$1 \quad 0 \quad 0 \quad 0 \quad 1 \quad 1 \quad 0 \quad 0 \quad 0 \quad 1 \quad 0$$
$$0 \quad 1 \quad 0 \quad 0 \quad 1 \quad 0 \quad 1 \quad 0 \quad 0 \quad 1 \quad 0$$
$$0 \quad 0 \quad 1 \quad 0 \quad 1 \quad 0 \quad 0 \quad 1 \quad 0 \quad 1 \quad 0 .$$
$$0 \quad 0 \quad 0 \quad 1 \quad 1 \quad 0 \quad 0 \quad 0 \quad 1 \quad 1 \quad 0$$
$$0 \quad 0 \quad 0 \quad 0 \quad 0 \quad 1 \quad 1 \quad 1 \quad 1 \quad 1 \quad 1$$

It should be noted that the above generator matrices are provided as an example, not as a limitation, and any other variances are also possible. For example, the matrices set forth above may be pre-multiplied and post-multiplied by binary permutation matrices, resulting in new matrices with the rows and/or the columns permuted. This column and/or row permutation will preserve the distance properties of the code.

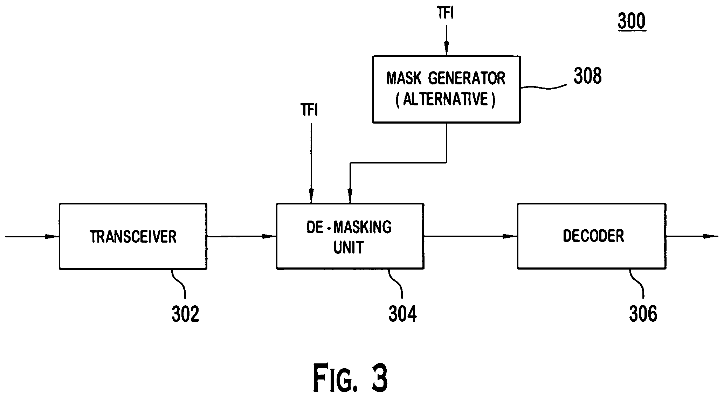

Figure 3 is an example block diagram of a receiving station 300. The receiving station 300 may be a WTRU, a base station, or any other apparatus or device. The receiving station 300 includes a transceiver 302, a de-masking unit 304, and a decoder 306. The receiving station 300 may optionally further include a mask generator 308. The transceiver 302 receives a radio block including a PAN field and a masked PCS, such as the one shown in Figure 1. The transceiver 302 outputs the PAN field and the masked PCS. The de-masking unit 304 de-masks the received masked PCS with its own TFI assigned to a TBF or alternatively with a mask generated by the mask generator 308 using its own TFI. The de-masking unit 304 outputs PAN bits and de-masked PCS bits. The decoder 306 then computes a PCS, (e.g., CRC bits), based on the received PAN field and compares the computed PCS with the de-masked received PCS. If the two PCSs agree, then the received PAN field is declared to be addressed to the receiving station 300. If the two PCSs do not agree, the PAN field is declared to be not addressed to the receiving station 300 and then may be discarded.

Alternatively, the decoder 306 may compute a PCS, (e.g., using CRC), and then mask the computed PCS with its TFI or a mask generated based on the TFI and then compare the computed masked PCS to the received masked PCS.

The receiving station 300 may need to decode the received PAN against more than 1 stored TFIs because the receiving station 300 may be allocated more than one TBF, and each TBF has a TFI of its own. When multiple TBFs are allocated to the receiving station 300, the receiving station 300 determines which TBF the PAN is addressed by de-masking against each possible TFI corresponding to its allocated TBFs.

Embodiments.

1. A method for indicating a TBF to which a PAN field is addressed.

2. The method of embodiment 1 comprising generating a PCS based on the PAN field.

3. The method of embodiment 2 comprising masking the PCS with a mask, the mask being related to the TBF.

4. The method of embodiment 3 comprising sending a data block including the PAN field and the masked PCS.

5. The method as in any one of embodiments 3-4, wherein the mask is a TFI assigned to the TBF.

6. The method as in any one of embodiments 3-5, wherein the masking of the PCS with the TFI is performed by bit-wise modulo-2 addition of at least one bit of the PCS with at least one bit of the TFI.

7. The method as in any one of embodiments 3-6, wherein a length of the PCS and a length of the TFI are different and N bits of the TFI are masked with N bits of the PCS.

8. The method of embodiment 7, wherein the N bits of the PCS are one of first N bits of the PCS, last N bits of the PCS, and a subset of the PCS.

9. The method as in any one of embodiments 3-8, wherein the PCS is generated by performing CRC encoding with the PAN field.

10. The method as in any one of embodiments 2-3, wherein the mask is generated based on a TFI assigned to the TBF.

11. The method of embodiment 10 wherein the mask is generated by converting the TFI using an (M, N) code, M being not greater than the number of PCS bits and N being the number of TFI bits.

12. The method of embodiment 10 wherein the mask is obtained by binary multiplying the TFI with a generator matrix.

13. The method of embodiment 12 wherein M equals 6 and the generator matrix is as follows:

$$
\begin{bmatrix}
1 & 0 & 0 & 0 & 0 & 1 \\
0 & 1 & 0 & 0 & 0 & 1 \\
0 & 0 & 1 & 0 & 0 & 1 \\
0 & 0 & 0 & 1 & 0 & 1 \\
0 & 0 & 0 & 0 & 1 & 1
\end{bmatrix}.
$$

14. The method of embodiment 12 wherein M equals 7 and the generator matrix is as follows:

$$
\begin{bmatrix}
1 & 0 & 0 & 0 & 0 & 1 & 1 \\
0 & 1 & 0 & 0 & 0 & 1 & 1 \\
0 & 0 & 1 & 0 & 0 & 1 & 1 \\
0 & 0 & 0 & 1 & 0 & 1 & 1 \\
0 & 0 & 0 & 0 & 1 & 1 & 1
\end{bmatrix}.
$$

15. The method of embodiment 12 wherein M equals 8 and the generator matrix is as follows:

$$
\begin{bmatrix}
1 & 0 & 0 & 0 & 0 & 1 & 1 & 0 \\
0 & 1 & 0 & 0 & 0 & 1 & 0 & 1 \\
0 & 0 & 1 & 0 & 0 & 0 & 1 & 1 \\
0 & 0 & 0 & 1 & 0 & 1 & 1 & 1 \\
0 & 0 & 0 & 0 & 1 & 1 & 1 & 1
\end{bmatrix}.
$$

16. The method of embodiment 12 wherein M equals 9 and the generator matrix is as follows:

$$
\begin{bmatrix}
1 & 0 & 0 & 0 & 0 & 0 & 1 & 1 & 1 \\
0 & 1 & 0 & 0 & 0 & 1 & 0 & 1 & 1 \\
0 & 0 & 1 & 0 & 0 & 1 & 1 & 0 & 1 \\
0 & 0 & 0 & 1 & 0 & 1 & 1 & 1 & 0 \\
0 & 0 & 0 & 0 & 1 & 1 & 1 & 1 & 1
\end{bmatrix}.
$$

17. The method of embodiment 12 wherein M equals 10 and the generator matrix is as follows:

$$
\begin{bmatrix}
1 & 0 & 0 & 0 & 0 & 0 & 1 & 1 & 1 & 1 \\
0 & 1 & 0 & 0 & 0 & 1 & 0 & 1 & 1 & 1 \\
0 & 0 & 1 & 0 & 0 & 1 & 1 & 0 & 1 & 1 \\
0 & 0 & 0 & 1 & 0 & 1 & 1 & 1 & 0 & 1 \\
0 & 0 & 0 & 0 & 1 & 1 & 1 & 1 & 1 & 0
\end{bmatrix}.
$$

18. The method of embodiment 12 wherein M equals 11 and the generator matrix is as follows:

$$
\begin{bmatrix}
1 & 0 & 0 & 0 & 1 & 1 & 0 & 0 & 0 & 1 & 0 \\
0 & 1 & 0 & 0 & 1 & 0 & 1 & 0 & 0 & 1 & 0 \\
0 & 0 & 1 & 0 & 1 & 0 & 0 & 1 & 0 & 1 & 0 \\
0 & 0 & 0 & 1 & 1 & 0 & 0 & 0 & 1 & 1 & 0 \\
0 & 0 & 0 & 0 & 0 & 1 & 1 & 1 & 1 & 1 & 1
\end{bmatrix}.
$$

19. A method for processing a PAN field addressing a TBF.

20. The method of embodiment 19 comprising receiving a data block including a PAN field and a masked PCS.

21. The method of embodiment 20 comprising de-masking the masked PCS with a mask, the mask being related to the TBF.

22. The method of embodiment 21 comprising performing PCS decoding with the PAN field and the de-masked PCS.

23. The method as in any one of embodiments 21-22, wherein the mask is a TFI assigned to the TBF.

24. The method as in any one of embodiments 21-22, wherein the mask is generated based on a TFI assigned to the TBF.

25. The method as in any one of embodiments 22-24, wherein the PCS decoding is performed by CRC decoding with the received PAN field.

26. A method for processing a PAN field addressing a TBF.

27. The method of embodiment 26 comprising receiving a data block including a PAN field and a masked PCS.

28. The method of embodiment 27 comprising computing a PCS with the received PAN field.

29. The method of embodiment 28 comprising masking the computed PCS with a mask, the mask being related to the TBF.

30. The method of embodiment 29 comprising comparing the received masked PCS and the computed masked PCS.

31. The method as in any one of embodiments 29-30, wherein the mask is a TFI assigned to the TBF.

32. The method as in any one of embodiments 29-30, wherein the mask is generated based on a TFI assigned to the TBF.

33. The method as in any one of embodiments 28-32, wherein the PCS is computed by performing CRC encoding with the received PAN field.

34. The method as in any one of embodiments 29-30, wherein the mask is generated by converting the TFI using an (M, N) code, M being not greater than the number of PCS bits and N being the number of TFI bits.

35. An apparatus for indicating a TBF to which a PAN field is addressed.

36. The apparatus of embodiment 35 comprising a PCS generator for processing a PAN field to generate a PCS.

37. The apparatus of embodiment 36 comprising a masking unit for masking the PCS with a mask, the mask being related to the TBF.

38. The apparatus of embodiment 37 comprising a transceiver for sending a data block including the PAN field and the masked PCS.

39. The apparatus as in any one of embodiments 37-38, wherein the mask is a TFI assigned to the TBF.

40. The apparatus of embodiment 39 wherein the masking unit performs the masking of the PCS and the TFI by bit-wise modulo-2 addition of at least one bit of the PCS with at least one bit of the TFI.

41. The apparatus as in any one of embodiments 39-40, wherein a length of the PCS and a length of the TFI are different and N bits of the TFI are masked with N bits of the PCS.

42. The apparatus of embodiment 41 wherein the N bits of the PCS are one of first N bits of the PCS, last N bits of the PCS, and a subset of the PCS.

43. The apparatus as in any one of embodiments 37-42, wherein the PCS is generated by performing CRC encoding with the PAN field.

44. The apparatus as in any one of embodiments 37-43, further comprising a mask generator for generating the mask based on a TFI assigned to the TBF.

45. The apparatus of embodiment 44 wherein the mask generator converts the TFI into the mask using an (M, N) code, M being not greater than the number of PCS bits and N being the number of TFI bits.

46. The apparatus of embodiment 44 wherein the mask is generated by binary multiplying the TFI with a generator matrix.

47. The apparatus of embodiment 46 wherein M equals 6 and the generator matrix is as follows:

$$
\begin{array}{cccccc}
1 & 0 & 0 & 0 & 0 & 1 \\
0 & 1 & 0 & 0 & 0 & 1 \\
0 & 0 & 1 & 0 & 0 & 1 \\
0 & 0 & 0 & 1 & 0 & 1 \\
0 & 0 & 0 & 0 & 1 & 1
\end{array}.
$$

48. The apparatus of embodiment 46 wherein M equals 7 and the generator matrix is as follows:

$$
\begin{array}{ccccccc}
1 & 0 & 0 & 0 & 0 & 1 & 1 \\
0 & 1 & 0 & 0 & 0 & 1 & 1 \\
0 & 0 & 1 & 0 & 0 & 1 & 1 \\
0 & 0 & 0 & 1 & 0 & 1 & 1 \\
0 & 0 & 0 & 0 & 1 & 1 & 1
\end{array}.
$$

49. The apparatus of embodiment 46 wherein M equals 8 and the generator matrix is as follows:

$$
\begin{array}{cccccccc}
1 & 0 & 0 & 0 & 0 & 1 & 1 & 0 \\
0 & 1 & 0 & 0 & 0 & 1 & 0 & 1 \\
0 & 0 & 1 & 0 & 0 & 0 & 1 & 1 \\
0 & 0 & 0 & 1 & 0 & 1 & 1 & 1 \\
0 & 0 & 0 & 0 & 1 & 1 & 1 & 1
\end{array}.
$$

50. The apparatus of embodiment 46 wherein M equals 9 and the generator matrix is as follows:

$$
\begin{array}{ccccccccc}
1 & 0 & 0 & 0 & 0 & 0 & 1 & 1 & 1 \\
0 & 1 & 0 & 0 & 0 & 1 & 0 & 1 & 1 \\
0 & 0 & 1 & 0 & 0 & 1 & 1 & 0 & 1 \\
0 & 0 & 0 & 1 & 0 & 1 & 1 & 1 & 0 \\
0 & 0 & 0 & 0 & 1 & 1 & 1 & 1 & 1
\end{array}.
$$

51. The apparatus of embodiment 46 wherein M equals 10 and the generator matrix is as follows:

$$
\begin{array}{cccccccccc}
1 & 0 & 0 & 0 & 0 & 0 & 1 & 1 & 1 & 1 \\
0 & 1 & 0 & 0 & 0 & 1 & 0 & 1 & 1 & 1 \\
0 & 0 & 1 & 0 & 0 & 1 & 1 & 0 & 1 & 1 \\
0 & 0 & 0 & 1 & 0 & 1 & 1 & 1 & 0 & 1 \\
0 & 0 & 0 & 0 & 1 & 1 & 1 & 1 & 1 & 0
\end{array}.
$$

52. The apparatus of embodiment 46 wherein M equals 11 and the generator matrix is as follows:

$$\begin{array}{ccccccccccc}
1 & 0 & 0 & 0 & 1 & 1 & 0 & 0 & 0 & 1 & 0 \\
0 & 1 & 0 & 0 & 1 & 0 & 1 & 0 & 0 & 1 & 0 \\
0 & 0 & 1 & 0 & 1 & 0 & 0 & 1 & 0 & 1 & 0 \\
0 & 0 & 0 & 1 & 1 & 0 & 0 & 0 & 1 & 1 & 0 \\
0 & 0 & 0 & 0 & 0 & 1 & 1 & 1 & 1 & 1 & 1
\end{array}.$$

53. An apparatus for processing a PAN field addressing a TBF.

54. The apparatus of embodiment 53 comprising a transceiver for receiving a data block including a PAN field and a masked PCS.

55. The apparatus of embodiment 54 comprising a de-masking unit for de-masking the masked PCS with a mask, the mask being related to the TBF.

56. The apparatus of embodiment 55 comprising a PCS decoder for performing PCS decoding with the PAN field and the de-masked PCS.

57. The apparatus as in any one of embodiments 55-56, wherein the mask is a TFI assigned to the TBF.

58. The apparatus as in any one of embodiments 55-56, wherein the mask is generated based on a TFI assigned to the TBF.

59. The apparatus as in any one of embodiments 56-58, wherein the PCS decoder is a CRC decoder.

60. An apparatus for processing a PAN field addressing a TBF.

61. The apparatus of embodiment 60 comprising a transceiver for receiving a data block including a PAN field and a masked PCS.

62. The apparatus of embodiment 61 comprising a PCS encoder for computing a PCS with the received PAN field.

63. The apparatus of embodiment 62 comprising a masking unit for masking the computed PCS with a mask, the mask being related to the TBF.

64. The apparatus of embodiment 63 comprising a comparator for comparing the received masked PCS and the computed masked PCS.

65. The apparatus as in any one of embodiments 63-64, wherein the mask is a TFI assigned to the TBF.

66. The apparatus as in any one of embodiments 63-64, wherein the mask is generated based on a TFI assigned to the TBF.

67. The apparatus of embodiment 66 wherein the mask generator converts the TFI into the mask using an (M, N) code, M being not greater than the number of PCS bits and N being the number of TFI bits.

68. The apparatus as in any one of embodiments 62-67, wherein the PCS encoder is a CRC encoder and the PCS is a CRC checksum.

Although features and elements are described above in particular combinations, each feature or element can be used alone without the other features and elements or in various combinations with or without other features and elements. The methods or flow charts provided herein may be implemented in a computer program, software, or firmware incorporated in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) or Ultra Wide Band (UWB) module.

**Claims**

1. A method for indicating a temporary block flow, TBF, to which a piggybacked acknowledgement/non-acknowledgement, PAN, field (110) is addressed, the method comprising:

> generating a PAN check sequence, PCS, based on the PAN field (110), the PCS having an integer number of PCS bits;
> masking a subset of the PCS bits with a temporary flow identity, TFI, of a TBF to which the PAN field (110) is addressed to generate a masked PCS (112), the TFI having an integer number of bits that is less than the integer number of PCS bits;

generating a data block (100) including a header (102), a data part (106), the PAN field (110) and the masked PCS (112), wherein the data part (106) and the PAN field (110) are addressed to different TBFs; and
sending the data block (100).

2. The method of claim 1, wherein the masking of the PCS with the TFI is performed by bit-wise modulo-2 addition of at least one bit of the PCS with at least one bit of the TFI.

3. The method of claim 1, wherein the TFI is masked with a first N bits of the PCS bits or a last N bits of the PCS bits.

4. A method for processing a piggybacked acknowledgement/non-acknowledgement, PAN, field (110) addressing a temporary block flow, TBF, the method comprising:

receiving a data block (100) including a header (102), a data part (106), a PAN field (110) and a masked PAN check sequence, PCS, (112), wherein the data part (106) and the PAN field (110) are addressed to different TBFs; and
determining a TBF to which the PAN field (110) is addressed by:

generating a computed PCS based on the received PAN field (110);
generating a de-masked PCS by masking the masked PCS bits with a temporary flow identity, TFI, wherein the de-masked PCS has an integer number of bits, the TFI has an integer number of bits, and the integer number of bits of the TFI is less than the integer number of bits of the de-masked PCS; and
comparing the de-masked PCS with the computed PCS; or by:

generating a computed PCS based on the received PAN field (110);
masking the computed PCS with a temporary flow identity, TFI, wherein the computed PCS has an integer number of bits, the TFI has an integer number of bits, and the integer number of bits of the TFI is less than the integer number of bits of the computed PCS; and
comparing the computed masked PCS with the received masked PCS.

5. The method of claim 4, wherein the PCS decoding is performed by cyclic redundancy check, CRC, decoding with the received PAN field.

6. An apparatus for indicating a temporary block flow, TBF, to which a piggybacked acknowledgement/non-acknowledgement, PAN, field (110) is addressed, the apparatus (200) comprising:

a PAN check sequence, PCS, generator (202) for processing a PAN field (110) to generate a PCS, the PCS having an integer number of PCS bits;
a masking unit (204) for masking a subset of the PCS bits with a temporary flow identity, TFI, of a TBF to which the PAN field (110) is addressed to generate a masked PCS (112), the TFI having an integer number of bits that is less than the integer number of PCS bits; and
a transceiver (206) for sending a data block (100) including a header (102), a data part (106), the PAN field (110) and the masked PCS (112), wherein the data part (106) and the PAN field (110) are addressed to different TBFs.

7. The apparatus of claim 6, wherein the masking unit (204) performs the masking of the PCS and the TFI by bit-wise modulo-2 addition of at least one bit of the PCS with at least one bit of the TFI.

8. The apparatus of claim 6, wherein the TFI is masked with a first N bits of the PCS bits or a last N bits of the PCS bits.

9. An apparatus for processing a piggybacked acknowledgement/non-acknowledgement, PAN, field (110) addressing a temporary block flow, TBF, the apparatus (300) comprising:

a transceiver (302) for receiving a data block (100) including a header (102), a data part (106), a PAN field (110) and a masked PAN check sequence, PCS, (112), wherein the data part (106) and the PAN field (110) are addressed to different TBFs; and
a PCS decoder (306) for determining a TBF to which the PAN field (110) is addressed by:

generating a computed PCS based on the received PAN field (110);
generating a de-masked PCS by masking the masked PCS bits with a temporary flow identity, TFI, wherein the de-masked PCS has an integer number of bits, the TFI has an integer number of bits, and the integer number of bits of the TFI is less than the integer number of bits of the de-masked PCS; and
comparing the de-masked PCS with the computed PCS; or by:

generating a computed PCS based on the received PAN field (110);
masking the computed PCS with a temporary flow identity, TFI, wherein the computed PCS has an integer number of bits, the TFI has an integer number of bits, and the integer number of bits of the TFI is less than the integer number of bits of the computed PCS; and comparing the computed masked PCS with the received masked PCS.

10. The apparatus of claim 9, wherein the PCS decoder is a cyclic redundancy check, CRC, decoder.

**Patentansprüche**

1. Verfahren zum Angeben eines temporären Blockflusses, TBF, an den ein Huckepack-ACK/NACK-, PAN, Feld (110) adressiert ist, wobei das Verfahren folgende Schritte umfasst:

Generieren einer PAN-Prüfsequenz, PCS, basierend auf dem PAN-Feld (110), wobei die PCS eine ganzzahlige Anzahl von PCS-Bits aufweist;
Maskieren einer Teilmenge der PCS-Bits mit einer temporären Flussidentität, TFI, eines TBF, an den das PAN-Feld (110) adressiert ist, um eine maskierte PCS (112) zu generieren, wobei die TFI eine ganzzahlige Anzahl von Bits aufweist, die kleiner als die ganzzahlige Anzahl von PCS-Bits ist;
Generieren eines Datenblocks (100), der einen Header (102), einen Datenteil (106), das PAN-Feld (110) und die maskierte PCS (112) umfasst, wobei der Datenteil (106) und das PAN-Feld (110) an verschiedene TBF adressiert sind; und
Senden des Datenblocks (100).

2. Verfahren nach Anspruch 1, wobei das Maskieren der PCS mit der TFI durch eine bitweise Modulo-2-Addition mindestens eines Bits der PCS mit mindestens einem Bit der TFI erfolgt.

3. Verfahren nach Anspruch 1, wobei die TFI mit den ersten N Bits der PCS-Bits oder den letzten N Bits der PCS-Bits maskiert ist.

4. Verfahren zum Verarbeiten eines Huckepack-ACK/NACK-, PAN, Feldes (110), das einen temporären Blockfluss, TBF, adressiert, wobei das Verfahren folgende Schritte umfasst:

Empfangen eines Datenblocks (100), der einen Header (102), einen Datenteil (106), ein PAN-Feld (110) und eine maskierte PAN-Prüfsequenz, PCS, (112) umfasst, wobei der Datenteil (106) und das PAN-Feld (110) an verschiedene TBF adressiert sind; und
Bestimmen eines TBF, an welches das PAN-Feld (110) adressiert ist durch:

Generieren einer berechneten PCS basierend auf dem empfangenen PAN-Feld (110);
Generieren einer demaskierten PCS durch Maskieren der maskierten PCS-Bits mit einer temporären Flussidentität, TFI, wobei die demaskierte PCS eine ganzzahlige Anzahl von Bits aufweist, die TFI eine ganzzahlige Anzahl von Bits aufweist, und die ganzzahlige Anzahl von Bits der TFI kleiner als die ganzzahlige Anzahl von Bits der demaskierten PCS ist; und
Vergleichen der demaskierten PCS mit der berechneten PCS;

oder durch:

Generieren einer berechneten PCS basierend auf dem empfangenen PAN-Feld (110);
Maskieren der berechneten PCS mit einer temporären Flussidentität, TFI, wobei die berechnete PCS eine ganzzahlige Anzahl von Bits aufweist, die TFI eine ganzzahlige Anzahl von Bits aufweist und die ganzzahlige Anzahl von Bits der TFI kleiner als die ganzzahlige Anzahl von Bits der berechneten PCS ist; und
Vergleichen der berechneten maskierten PCS mit der empfangenen maskierten PCS.

5. Verfahren nach Anspruch 4, wobei die PCS-Decodierung durch eine Decodierung mit zyklischer Redundanzprüfung, CRC, mit dem empfangenen PAN-Feld erfolgt.

6. Gerät zum Angeben eines temporären Blockflusses, TBF, an den ein Huckepack-ACK/NACK-, PAN, Feld (110) adressiert ist, wobei das Gerät (200) Folgendes umfasst:

einen Generator (202) einer PAN-Prüfsequenz, PCS, zum Verarbeiten eines PAN-Feldes (110), um eine PCS zu generieren, wobei die PCS eine ganzzahlige Anzahl von PCS-Bits aufweist;
eine Maskierungseinheit (204) zum Maskieren einer Teilmenge der PCS-Bits mit einer temporären Flussidentität, TFI, eines TBF, an den das PAN-Feld (110) adressiert ist, um eine maskierte PCS (112) zu generieren, wobei die TFI eine ganzzahlige Anzahl von Bits aufweist, die kleiner als die ganzzahlige Anzahl von PCS-Bits ist;

und

einen Transceiver (206) zum Senden eines Datenblocks (100), der einen Header (102), einen Datenteil (106), das PAN-Feld (110) und die maskierte PCS (112) umfasst, wobei der Datenteil (106) und das PAN-Feld (110) an verschiedene TBF adressiert ist.

7. Gerät nach Anspruch 6, wobei die Maskierungseinheit (204) die Maskierung der PCS und die der TFI durch eine bitweise Modulo-2-Addition mindestens eines Bits der PCS mit mindestens einem Bit der TFI ausführt.

8. Gerät nach Anspruch 6, wobei die TFI mit den ersten N Bits der PCS-Bits oder den letzten N Bits der PCS-Bits maskiert ist.

9. Gerät zum Verarbeiten eines Huckepack-ACK/NACK-, PAN, Feldes (110), das einen temporären Blockfluss, TBF, adressiert, wobei das Gerät (300) Folgendes umfasst:

einen Transceiver (302) zum Empfangen eines Datenblocks (100), der einen Heaser (102), einen Datenteil (106), ein PAN-Feld (110) und eine maskierte PAN-Prüfsequenz, PCS, (112) umfasst, wobei der Datenteil (106) und das PAN-Feld (110) an verschiedene TBF adressiert sind; und
einen PCS-Decoder (306) zum Bestimmen eines TBF, an den das PAN-Feld (110) adressiert ist durch:

Generieren einer berechneten PCS basierend auf dem empfangenen PAN-Feld (110);
Generieren einer demaskierten PCS durch Maskieren der maskierten PCS-Bits mit einer temporären Flussidentität, TFI, wobei die demaskierte PCS eine ganzzahlige Anzahl von Bits aufweist, die TFI eine ganzzahlige Anzahl von Bits aufweist, und die ganzzahlige Anzahl von Bits der TFI kleiner als die ganzzahlige Anzahl von Bits der demaskierten PCS ist; und
Vergleichen der demaskierten PCS mit der berechneten PCS;

oder durch:

Generieren einer berechneten PCS basierend auf dem empfangenen PAN-Feld (110);
Maskieren der berechneten PCS mit einer temporären Flussidentität, TFI, wobei die berechnete PCS eine ganzzahlige Anzahl von Bits aufweist, die TFI eine ganzzahlige Anzahl von Bits aufweist und die ganzzahlige Anzahl von Bits der TFI kleiner als die ganzzahlige Anzahl von Bits der berechneten PCS ist; und
Vergleichen der berechneten maskierten PCS mit der empfangenen maskierten PCS.

10. Gerät nach Anspruch 9, wobei der PCS-Decoder ein Decoder mit zyklischer Redundanzprüfung, CRC, ist.

**Revendications**

1. Procédé pour indiquer un flux de bloc temporaire, TBF, auquel est adressé un champ superposé d'accusé de réception/accusé de non-réception, PAN (110) est adressé, le procédé comprenant :

de générer une séquence de vérification de PAN, PCS, en se basant sur le champ de PAN (110), la PCS ayant un nombre entier de bits de PCS ;
de masquer un sous-ensemble des bits de PCS avec une identité de flux temporaire, TFI, d'un TBF auquel le champ de PAN (110) est adressé pour générer une PCS masquée (112), la TFI ayant un nombre entier de bits qui est inférieur au nombre entier de bits de PCS ;
de générer un bloc de données (100) incluant un en-tête (102), une partie de données (106), le champ de PAN (110) et la PCS masquée (112), dans lequel la partie de données (106) et le champ de PAN (110) sont adressés à différents TBF : et
envoyer le bloc de données (100).

2. Procédé selon la revendication 1, dans lequel le masquage de la PCS avec la TFI est effectué par un modulo 2 au niveau des bits de l'addition d'au moins un bit de la PCS avec au moins un bit de la TFI.

3. Procédé selon la revendication 1, dans lequel la TFI est masquée avec un premier N bit des bits de PCS ou un dernier N bit de bits de PCS.

4. Procédé pour traiter un champ superposé d'accusé de réception/accusé de non-réception, PAN (110) adressant à un flux de bloc temporaire, TBF, le procédé comprenant :

de recevoir un bloc de données (100) incluant un en-tête (102), une partie de données (106), un champ de PAN (110) et une séquence de vérification de PAN, PCS, (112) dans lequel la partie de données (106) et le champ de PAN (110) sont adressés à différents TBF : et

de déterminer un TBF auquel le champ de PAN (110) est adressé en :

générant une PCS calculée en se basant sur le champ de PAN (110) reçu ;
générant une PCS démasquée en masquant les bits de PCS masquée avec une identité de flux temporaire, TFI, dans lequel la PCS démasquée a un nombre entier de bits, la TFI a un nombre entier de bits, et le nombre entier de bits de la TFI est inférieur au nombre entier de bits de la PCS démasquée ; et en
comparant la PCS démasquée avec la PCS calculée ;
ou en :

générant une PCS calculée en se basant sur le champ de PAN (110) reçu ;
masquant la PCS calculée avec une identité de flux temporaire, TFI, dans lequel la PCS calculée a un nombre entier de bits, la TFI a un nombre entier de bits, et le nombre entier de bits de la TFI est inférieur au nombre entier de bits de la PCS calculée ; et en
comparant la PCS masquée calculée avec la PCS masquée reçue.

5. Procédé selon la revendication 4, dans lequel le décodage de PCS est exécuté par un décodage de vérification de redondance cyclique, CRC avec le champ de PAN reçu.

6. Appareil pour indiquer un flux de bloc temporaire, TBF, auquel est adressé un champ superposé d'accusé de réception/accusé de non-réception, PAN (110) est adressé, l'appareil (200) comprenant :

un générateur (202) de séquence de vérification de PAN, PCS pour traiter un champ de PAN (110) pour générer une PCS, la PCS ayant un nombre entier de bits de PCS ;
une unité de masquage (204) pour masquer un sous-ensemble des bits de PCS avec une identité de flux temporaire, TFI, d'un TBF auquel le champ de PAN (110) est adressé pour générer une PCS masquée (112), la TFI ayant un nombre entier de bits qui est inférieur au nombre entier de bits de PCS ; et
un émetteur-récepteur (206) pour envoyer un bloc de données (100) incluant un en-tête (102), une partie de données (106), le champ de PAN (110) et la PCS masquée (112), dans lequel la partie de données (106) et le champ de PAN (110) sont adressés à différents TBF.

7. Appareil selon la revendication 6, dans lequel l'unité de masquage (204) effectue le masquage de la PCS et de la TFI par un modulo 2 au niveau des bits de l'addition d'au moins un bit de la PCS avec au moins un bit de la TFI.

8. Appareil selon la revendication 6, dans lequel la TFI est masquée avec un premier N bit des bits de PCS ou un dernier N bit de bits de PCS.

9. Appareil pour traiter un champ superposé d'accusé de réception/accusé de non-réception, PAN (110) adressant à un flux de bloc temporaire, TBF, l'appareil (300) comprenant :

un émetteur-récepteur (302) pour recevoir un bloc de données (100) incluant un en-tête (102), une partie de données (106), un champ de PAN (110) et une séquence de vérification de PAN, PCS (112), dans lequel la partie de données (106) et le champ de PAN (110) sont adressés à différents TBF ; et
un décodeur de PCS (306) pour déterminer un TBF auquel le champ de PAN (110) est adressé en :

générant une PCS calculée en se basant sur le champ de PAN (110) reçu ;
générant une PCS démasquée en masquant les bits de PCS masquée avec une identité de flux temporaire, TFI, dans lequel la PCS démasquée a un nombre entier de bits, la TFI a un nombre entier de bits, et le nombre entier de bits de la TFI est inférieur au nombre entier de bits de la PCS démasquée ; et en
comparant la PCS démasquée avec la PCS calculée ;
ou en :

générant une PCS calculée en se basant sur le champ de PAN (110) reçu ;
masquant la PCS calculée avec une identité de flux temporaire, TFI, dans lequel la PCS calculée a un nombre entier de bits, la TFI a un nombre entier de bits, et le nombre entier de bits de la TFI est inférieur au nombre entier de bits de la PCS calculée ; et en
comparant la PCS masquée calculée avec la PCS masquée reçue.

10. Appareil selon la revendication 9, dans lequel le décodeur de PCS est un décodeur de vérification de redondance cyclique, CRC.

EP 2 140 597 B1

**100**

| RADIO BLOCK | | | | | |
|---|---|---|---|---|---|
| RLC / MAC HEADER | HCS | RLC DATA | BCS | PAN | PCS |

102      104           106      108      110      112

## FIG. 1

**200**

TFI

MASK GENERATOR
( ALTERNATIVE ) — 208

TFI

201

ENCODER → MASKING UNIT → TRANSCEIVER →

202               204               206

## FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2387303 A
- US 20020170013 A1

**Non-patent literature cited in the description**

- **HUAWEI.** Discussion on Fast Ack/Nack report. *3GPP TSG GERAN #33, GP-070172,* 12 February 2007